# EUROPÄISCHE PATENTSCHRIFT

(11) **EP 2 272 329 B1**
(45) Veröffentlichungstag und Bekanntmachung des Hinweises auf die Patenterteilung: **19.10.2016**
(21) Anmeldenummer: 10001496.8
(22) Anmeldetag: 13.02.2010
(51) Int. Cl.: A01K 5/02

(54) **Futter-Fördereinrichtung**
Animal feed supply device
Convoyeur de rembourrage

(30) Priorität: 16.02.2009 DE 102009010215
(43) Veröffentlichungstag der Anmeldung: 12.01.2011
(73) Patentinhaber: Volkert, Robert, 90596 Schwanstetten (DE)
(72) Erfinder: Volkert, Robert, 90596 Schwanstetten (DE)
(74) Vertreter: Hoffmann Eitle

(56) Entgegenhaltungen:
- EP-A1- 1 825 761
- DE-A1- 2 129 069
- DE-A1- 2 301 024
- DE-U1- 7 634 325
- US-A- 3 333 574

## Beschreibung

Die vorliegende Erfindung betrifft eine Futter-Fördereinrichtung zum Transportieren von Futter zu Futterplätzen insbesondere von Milchkühen. Die Erfindung betrifft auch eine Fütterungseinrichtung zur vorzugsweise automatischen Fütterung von Milchkühen mit einer derartigen Futter-Fördereinrichtung. Die Erfindung betrifft schließlich auch eine Futtermischung für eine derartige Fütterungseinrichtung.

Aus DE 7634325 U1 beispielsweise ist eine Futterfördereinrichtung bekannt geworden, bei der ein hin- und hergehendes Futterband vorgesehen ist, dass von einer Antriebskette mitgenommen wird. Die Antriebskette wird von einem Elektromotor angetrieben, und zwar wahlweise in beide Bewegungsrichtungen. Das Beschicken des Futterbandes mit Futter erfolgt über Auslauftrichter von Vorratsbehältern, wie Silos und dergleichen und zwar an einer, an dem einen Ende des Futterbandes gelegene Aufgabestelle für die gesamte Länge des Futterbandes. Das Futter kann direkt aus den einzelnen Silos auf das Futterband und zu den Tieren befördert werden.

Die Kühe stehen zu einer oder zu beiden Längsseiten entlang des Futterbandes, jeweils in einem Halsrahmen. Um zu verhindern, dass die Tiere, die nahe bei der Aufgabestelle stehen, den weiter entfernt stehenden Tieren das Futter wegfressen, ist eine Absperreinrichtung vorgesehen. Diese Absperreinrichtung weist eine Hebelmechanik auf, deren schwenkbare Arme in eine Lage schwenkbar sind, so dass die zwischen die Kühe und das Futterband eingeschwenkten Arme einen Zugang zum bereitliegenden Futter verhindern. Auf diese Art und Weise kann durch gezieites Betätigen der Hebelmechanik erreicht werden, dass lediglich bestimmten Kühen an ihren Futterplätzen ermöglicht wird, von dem Futterband zu fressen.

Diese Futter-Fördereinrichtung ist mit Nachteilen verbunden: zum einen ist Bedienpersonal erforderlich, um das wahlweise Hin- und Herbewegen des Futterbandes zur Beaufschlagung mit Futter zu ermöglichen.

Zum anderen ist die Absperreinrichtung sehr aufwendig, kosten- und wartungsintensiv.

Ein weiterer Nachteil soll nachstehend ausführlicher beschrieben werden. Landwirte mit Laufställen für Milchkühe streben eine hohe Melkfrequenz mit guten Erträgen an. Zu diesem Zweck kommen so genannte Melkroboter zum Einsatz. Der Melkroboter identifiziert jede Kuh und speichert relevante Informationen, beispielsweise die Anzahl von Melkungen an einem Tag, die Milchleistung, die Melkzeitpunkte und das aktuelle Tiergewicht.

Derartige Melkroboter sind in ihrer Anschaffung sehr kostspielig und in den Laufställen besteht demzufolge ein großes Interesse, die Milchleistung derart zu erhöhen, dass sich die Anschaffungskosten des Melkroboters möglichst rasch rentieren.

Maßnahmen zur Verbesserung der Melkfrequenz können darin bestehen, die Milchkühe mit Futter gewissermaßen dahingehend zu motivieren, zu dem Futterplatz zu kommen, der gemeinsam mit dem Melkroboter in dem Laufstall vorgesehen ist

Die weiter oben zum Stand der Technik beschriebene Futter-Fördereinrichtung ist nicht geeignet, in derartigen Laufställen die Milchkühe in der beschriebenen Weise zu motivieren: denn das Förderband wird lediglich betätigt, während Futter an einem Anfang des Futterbandes aufgegeben wird. Nach Beendigung der Futteraufgabe wird das Band gestoppt und die Kühe können fressen. Das bedeutet aber, alle Kühe erhalten gleiches Futter zu festgelegten Zeitpunkten. Die Absperrgitter sind zudem während der Aufgabe des Futters herabgelassen, so dass die Kühe nicht an das Futter gelangen.

Im Stand der Technik sind zahlreiche Vorschläge für eine automatisierte Fütterung von Milchkühen bekannt geworden. Grundsätzlich lassen sich Gruppen bezogene und Einzeltier bezogene Verfahren und Einrichtungen unterscheiden.

Bei den Gruppen bezogenen Verfahren und Einrichtungen sind stationäre und mobile Fütterungseinrichtungen zu unterscheiden. Beispiele für stationäre Einrichtungen können Futterbänder sein, wie sie bereits zum Stand der Technik beschrieben wurden. Als Beispiel für eine mobile Einrichtung kann ein selbst fahrender Futterwagen genannt werden. Schienengeführte Futterwagen können sowohl im stationären Betrieb als auch im mobilen Betrieb eingesetzt werden.

Die Einzeltier bezogenen Einrichtungen und Verfahren können beispielsweise eine sogenannte Grundfutter-Abrufstation aufweisen. Bei diesem System wird für jede Milchkuh ein eigenes Futterfach bereitgestellt. Für den Fall, das eine ranghöhere Milchkuh eine rangniedere Milchkuh von ihrem Futterfach vertreibt, um selbst aus diesem Futterfach zu fressen, wird dieses Fach der ranghöheren Kuh automatisch entzogen. Zu diesem Zweck wird ein Identifizierungssystem für die Milchkühe eingesetzt. Außerdem muss für jedes Futterfach eine entsprechende Mechanik bereitgestellt werden.

Sämtliche hier beschriebenen Fördereinrichtungen für Futter und Fütterungseinrichtungen mit derartigen Fördereinrichtungen sind entweder sehr aufwändig in den technischen Anforderungen und demzufolge sehr kostspielig, oder sie sehen eine Futtervorlage etwa fünf Mal täglich vor. Das jedoch bedeutet, dass zu einem Zeitpunkt Futter für alle Milchkühe vorgelegt wird, so dass alle Milchkühe gleichzeitig fressen wollen. Die von den Landwirten gewünschte "Ruhe im Stall" wird dadurch erschwert.

Die DE 2 301 024 betrifft eine automatische Viehfütterungsanlage, die ermöglicht, Futtervorräte für einige Tage bzw. ca. eine Woche aufzunehmen, automatisch zu dosieren und den einzelnen Futterplätzen zuzuführen. Dazu sind unter anderem eine Vorratsplattform mit Zerreißwalzen, eine Waage und ein Futterverteilband so angeordnet, dass entsprechende Futterportionen beim Abwickeln des Futterverteilbands auf dieses abgeworfen werden.

Die DE 2 129 069 betrifft eine Einrichtung zur Fütterung von Vieh, bei der eine vollautomatische Viehfütterung über eine mehrtägige Zeitspanne erreicht werden soll. Dazu sind insbesondere eine Misch- und Zwischenspeichervorrichtung am Ausgabeende des Förderers vorgesehen, deren Futteraufnahmeraum ein auf einen mehrtägigen Futterverbrauch ausgerichtetes Fassvermögen aufweist.

Die US 3,333,574 ist auf ein Verfahren und eine entsprechende Vorrichtung zum Füttern von Tieren gerichtet. Sie offenbart eine flexible Förderanordnung für Fütterungsmaterial, das zunächst in eine Richtung und dann in die andere Richtung getrieben wird, und auf beiden Seiten für Tiere zugänglich ist.

Aufgabe der vorliegenden Erfindung war es daher, eine Fördereinrichtung zum Transportieren von Futter zu Futterplätzen nach den Merkmalen des Oberbegriffs des Anspruch 1 anzugeben, die diese Nachteile vermeidet.

Erfindungsgemäß wurde diese Aufgabe durch die Fördereinrichtung zum Transportieren von Futter zu Futterplätzen gemäß Anspruch 1 gelöst.

Dadurch, dass die Futter-Fördereinrichtung ein endlos umlaufendes Förderband aufweist, dessen zur Aufnahme von Futter ausgebildetes Futtertrum sich in Transportrichtung zwischen einem Trumanfang und einem Trumende erstreckt, ist zunächst gewährleistet, dass ein gegenüber dem Stand der Technik reduzierter Aufwand für die Herstellung erreicht wird. Denn es genügt erfindungsgemäß, das Futterband in eine Richtung laufen zu lassen, ohne das ein Stoppen und Zurückfahren in die entgegen gesetzte Richtung zu Fütterungszwecken erforderlich wäre.

In erfindungsgemäß günstiger Weise kann beispielsweise Futter kontinuierlich oder intervallweise auf das Futtertrum vorgelegt werden, so dass nicht lediglich zu bestimmten Zeitpunkten Futter für die Milchkühe vorgelegt ist, sondern ständig Futter für alle Milchkühe auf dem Futtertrum bereitliegt.

Erstens unterstützt die Erfindung damit die angestrebte "Ruhe im Stall".

Zweitens können Absperrmaßnahmen, wie sie weiter oben im Stand der Technik beschrieben wurden, gänzlich entfallen. Da ständig Futter bereitliegt, gibt es keine Vortagezeitpunkte, zu denen die Milchkühe zunächst vom Futter ferngehalten werden müßten.

Drittens ist die erfindungsgemäße Fördereinrichtung für eine automatisierte Fütterung bestens geeignet. Denn eine maschinelle Futtervorlage aus einem Futterspeicher, beispielsweise über ein weiteres Förderband, das an die langsame Förderbandgeschwindigkeit des Förderbandes angepaßt ist, kann ohne großen technischen Aufwand bereitgestellt werden.

Viertens ermöglicht die sehr langsame Umlaufgeschwindigkeit des Futterbandes einen geringen Leistungsbedarf für den Antrieb des Förderbandes. Wenn beispielsweise Elektromotore für den Antrieb des Futterbandes eingesetzt werden, können diese eher klein ausgelegt sein, so dass der Stromverbrauch niedrig gehalten wird.

Fünftens werden mit der erfindungsgemäßen Fördereinrichtung die weiter oben beschriebenen Rangprobleme vermieden. Rangniedere Kühe werden nicht mehr von ranghöheren Kühen vom Fressplatz vertrieben, weil immer für alle Kühe Futter bereitliegt.

Sechstens fördert die erfindungsgemäße Fördereinrichtung das Futter in lediglich eine Richtung, nämlich von dem Anfang des Futtertrums zu dessen Ende. Aus diesem Grund können Getriebe für einen Wechsel des Drehsinns entfallen; auch ist kein Bedienpersonal erforderlich.

Siebtens ist der fäkal-orale Infektionsweg entscheidend unterbrochen. Bei den bekannten Fördereinrichtungen ist ein häufiges Begehen des Futterplatzes erforderlich, beispielsweise um frisches Futter vorzulegen, oder um Restfutter zu beseitigen; ein Betreten des Futtertisches ist dabei oftmals unumgänglich. Da die Schuhe verschmutzt sein können mit Fäkalien, kann der Futtertisch ebenfalls verschmutzt werden, so dass unerwünschte Infektionen über den verschmutzten Futtertisch die Folge sein können. Bei dem erfindungsgemäßen Förderband entfällt das häufige Begehen des Futterplatzes. Das Futter wird vorzugsweise automatisch über das Futtertrum gefördert und es braucht kein frisches Futter von Hand vorgelegt zu werden. Ferner kann nicht verbrauchtes Restfutter in einen am Ende Förderbandes aufgestellten Container fallen, und von dort abtransportiert werden. Das Restfutter braucht also nicht mehr von den Futterplätzen entfernt zu werden.

Dadurch dass die Fördergeschwindigkeit des endlosen Förderbandes für eine Verweildauer des Futters auf dem Futtertrum von 4 bis 30 Stunden vorgesehen ist, kann als weiterer wesentlicher Vorteil eine geschmackliche Änderung des geförderten Futters zur gezielten Manipulation der Milchkühe für eine Erhöhung der Melkfrequenz erreicht werden. Dies soll nachstehend näher erläutert werden:
Zweckmäßigerweise wird das Futter an den Trumanfang des Futtertrums aufgegeben. Die Verweildauer des Futters auf dem Futtertrum - also die Zeitspanne, in der das Futter von dem Anfang des Futtertrums bis zu dessen Ende gefördert wird - ist abhängig von der Futtermischung.

Bei einer gegebenen Futtermischung wird die Verweildauer so eingestellt, dass das Futter am Ende des Futtertrums beispielsweise durch Oxydation geschmacklich deutlich verändert ist gegenüber dem früheren Zeitpunkt, zu dem das frische Futter an den Anfang des Futtertrum gegeben wurde. Bei einer beispielhaft angenommenen Länge des Futtertrums von etwa 20m und einer an die gewählte Futtermischung angepaßte Verweildauer von ca 15 Stunden auf dem Futtertrum kann eine durchschnittliche Fördergeschwindigkeit für das erfindungsgemäße Transportband von etwa 1,3 Meter je Stunde eingestellt werden.

Die Bandgeschwindigkeit kann je nach Länge des Förderbandes und Futtermischung zwischen 1 Meter pro Stunde und etwa 8 Meter pro Stunde betragen. Diese durchschnittliche Fördergeschwindigkeit kann durch kontinuierliche Förderung mit konstanter Bandgeschwindigkeit oder aber auch durch diskontinuierliche Förderung erreicht werden, wobei bei einer diskontinuierlichen Förderung das Transportband abwechseln fördert und stillsteht.

Die Attraktivität des vorgelegten Futters auf dem Futterband nimmt zum Ende des Futtertrums auch deswegen ab, weil die entlang des Futtertrums fressenden Milchkühe Speichel absondern, der an vorgelegtes Futter auf dem Futtertrum und an das Futtertrum selbst abgeben wird. Weiter hinten in Richtung zum Trumende des Futtertrums stehende Milchkühe werden das Futter daher weniger attraktiv finden.

Wenn nun die Milchkühe zum Futtern in den Laufstall gehen, werden sie nach Möglichkeit zum Bandanfang des Futtertrum wollen, da das Futter dort frischer ist und besser schmeckt. In geschickter Weise kann die die erfindungsgemäße Fördereinrichtung entlang der Futterstrecke in mehrere Bereiche jeweils mit Zugang zum Futtertrum unterteilt sein, wobei der Zugang zu den dem Anfang des Futtertrums zunächst gelegenen Bereichen möglich ist, wenn die Milchkuh bestimmte Bedingungen erfüllt.

Vorzugsweise können diese Bedingungen vorsehen, dass die Milchkuh einen Melkroboter passiert und sich melken lässt. Nach dem Melkvorgang kann dann Zugang zu den Bereichen mit dem frischen Futter am Trumanfang des Futterbandes gewährt werden.

Die Attraktivität des frischen Futters kann die Milchkühe motivieren, sich von dem Melkroboter melken zu lassen, um anschließend Zugang zu dem Bereich mit dem frischen Futter zu bekommen.

Somit trägt die Erfindung letztlich zu einer Verbesserung der Melkfrequenz bei. Ferner sind Zwangsmaßnahmen wie im Stand der Technik überflüssig.

Absperreinrichtungen, die den Zugang zu frischem Futter verwehren, sind nicht erforderlich. Diejenigen Kühe, die nicht zum Melken wollen, können ebenso wie die gerade gemolkenen Kühe zu dem Futtertrum kommen, wobei lediglich aufgrund der erfindungsgemäßen Verweildauer des Futters auf dem Futtertrum die Qualität des bereitstehenden Futters entlang der Futterachse abnimmt. Die nicht gemolkenen Milchkühe müssen sich dann lediglich mit dem geschmacklich weniger attraktiven Futter begnügen.

Die Abnahme der Attraktivität des Futters zum Ende des Futtertrums kann in erfindungsgemäßer Weise weiter durch eine Futtermischung gefördert werden, die mehrere Futterkomponenten aufweist, von denen eine nahrhafter und/oder schmackhafter und von denen die andere weniger nahrhaft und/oder schmackhaft ist, wobei die weniger nahrhafte Komponente in einer Form beigemischt ist, so dass die Milchkühe diese weniger nahrhafte Futterkomponente beim Fressen aussondern können.

Die weniger nahrhafte und /oder schmackhafte Futtermischung kann in erfindungsgemäßer Ausgestaltung durch Stroh mit Stücklängen von 4 Zentimeter und länger gebildet sein.

Stroh ist für die Milchkühe nicht schmackhaft und wird von den Kühen liegengelassen, sofern die Futtermischung ein Aussondern ermöglicht. Bei einer Länge von durchschnittlich 4 Zentimetern oder mehr kann das Stroh von den Kühen problemlos ausgesondert werden. Am Bandende wird demzufolge der relative Anteil von Stroh in der Futtermischung deutlich höher sein als am Anfang des Futtertrums. Da die Kühe das qualitativ hochwertigere und frischere Futter bevorzugen, sind sie demzufolge veranlasst, weiter zum Trumanfang des Futtertrums zu gelangen. Vorzugsweise führt dieser Weg durch den Melkroboter, der Zugang zu dem frischsten Futter ermöglicht.

Die erfindungsgemäße Fördereinrichtung ermöglicht somit auch ein intelligentes Strohmanagement, letztlich auch zur Erhöhung der Melkfrequenz.

Das Futterband ist vorzugsweise-säurebeständig. Denn die vorgelegten Futtermischungen können säurehaltig sein, teils, weil konservierte und somit säurehaltige Futterkomponenten beigemischt sind, teils, weil auch das frische Futter säurehaltig sein kann.

Die Fördergeschwindigkeit ist abhängig von der Stalllänge und von der gewünschten Verweildauer des Futters. Diese Kriterien und die individuellen Anforderungen des Betreibers der erfindungsgemäßen Fördereinrichtung lassen eine steuerbare Bandgeschwindigkeit gegebenenfalls mit Intervallschaltung zweckmäßig erscheinen.

Eine erfindungsgemäße Weiterbildung kann eine Steuereinrichtung aufweisen zur Einstellung einer gewünschten Verweildauer des Futters auf dem Futtertrum. Diese Steuereinrichtung kann Hardware und Software aufweisen, um für gegebene Futtermischungen und eine gegebene Länge der Futterachse eine vorbestimmte durchschnittliche Verweildauer einzustellen. Wenn beispielsweise als Eingabeparameter die Länge der Futterachse und die gewählte Futtermischung eingegeben werden, kann mittels der Steuereinrichtung nach Auswertung der eingegebenen Parameter die optimale Verweildauer automatisch eingestellt werden.

Es hat sich gezeigt, dass eine vorteilhafte Bandbreite des Förderbandes etwa 25 Zentimeter bis 100 Zentimeter beträgt. Alle entlang lediglich einer Längsseite der Futterachse stehenden Milchkühe können so bequem an das Futter.

Wenn der Laufstall groß genug ist, können Steh- und Liegeplätze zu beiden Längsseiten des Förderbandes vorgesehen sein. In diesem Fall ist es zweckmäßig, wenn die Bandbreite des Förderbandes etwa 35 Zentimeter bis 200 Zentimeter beträgt. Dann können Fressplätze zu beiden Längsseiten des Förderbandes vorgesehen sein, so dass die Milchkühe entlang beiden Längsseiten fressen können.

Entlang wenigstens einer der beiden Längsseiten des Futtertrums kann ein Bord angeordnet sein, der verhindert, dass Futter vom Futtertrum seitlich an den Längsseiten herunterfällt. Vorzugsweise ist ein Bord an jeder Längseite angeordnet.

Die erfindungsgemäße Fördereinrichtung eignet sich für die Verwendung in einer Fütterungseinrichtung zur vorzugsweise automatischen Fütterung von Milchkühen, bei der ein Futterspeicher vorgesehen ist, aus dem Futter an den Bandanfang des Futtertrum abgegeben wird. In diesem Fall kann der Futterspeicher eine Transporteinrichtung aufweisen, die vorzugsweise durch ein Endlosförderband, einen Kratzbodenvorschub, einen Schubboden , ein über dem Futtertrum angeordneter Silo oder eine Trogschnecke gebildet ist. Mittels dieser Speicher-Transporteinrichtung kann das Futter aus dem Speicher an den Anfang des Futtertrums abgegeben werden.

Die Transporteinrichtung kann ein Vorratsband aufweisen, dessen Vorschubgeschwindigkeit an die gewünschte Füllmenge des Futterbandes angepasst werden kann. Diese Transporteinrichtung kann mit einer Intervallschaltung versehen sein für die erforderliche Anpassung versehen sein.

Die weiter oben bereits erwähnte Steuereinrichtung für die erfindungsgemäße Fördereinrichtung kann derart erweitert sein, dass die Transporteinrichtung und das Förderband miteinander gekoppelt sind. Die Abgabe von Futter aus dem Futterspeicher und die Förderung entlang der Futterstrecke können demzufolge mittels der Steuereinrichtung aufeinander abgestimmt sein.

Vorzugsweise ist am Ende der Futterstrecke eine Aufnahme zur Aufnahme von Restfutter vorgesehen ist. Wenn nicht alles Futter an der Futterstrecke von den Kühen gefressen wird, nimmt die Aufnahme das übrig gebliebene Futter auf.

Die Aufnahme kann ein Behälter sein, in den das Restfutter hineinfällt. Der Behälter kann dann wegtransportiert werden, um das Restfutter anderweitig zu verwerten.

Die erfindungsgemäße Fördereinrichtung wird in günstiger Weise in einer Fütterungseinrichtung verwendet, bei der ein Melkroboter zum automatischen Melken von Kühen vorgesehen ist. Ein Eingang für die Kühe zum Melkroboter ist vorgesehen, sowie ein Ausgang, an dem eine schaltbare Ausgangsweiche für die Kühe vorgesehen ist, wobei mittels der Ausgangsweiche wahlweise ein Zugang zu einem der getrennt voneinander angeordneten Bereiche jeweils mit Zugang zum Futtertrum geschaltet werden kann.

Wenn die Milchkuh von dem Melkroboter gemolken wurde und dieser alle erforderlichen Daten aufgenommen und verarbeitet hat, kann über eine Schalteinrichtung die Ausgangsweiche so geschaltet werden, dass die Milchkuh Zugang zu dem Bereich an der Futterstrecke erhält, an dem das Futter ganz frisch ist und somit am schmackhaftesten für die Milchkuh ist. Die Attraktivität des frischen Futters veranlasst die Milchkühe, freiwillig zum Melkroboter zu gehen.

Der Bereich mit dem frischsten Futter oder auch der Melkroboter können mit einem Luftgebläse versehen sein. Dies ist von Vorteil, wenn Insekten im Stall sind, die die Kühe während des Melkens oder während des Fressens stören. Denn die vom Luftgebläse verursachte Zugluft vertreibt die Insekten, mit der erwünschten Folge, dass die Attraktivität von diesen Orten für die Milchkühe weiter zunimmt.

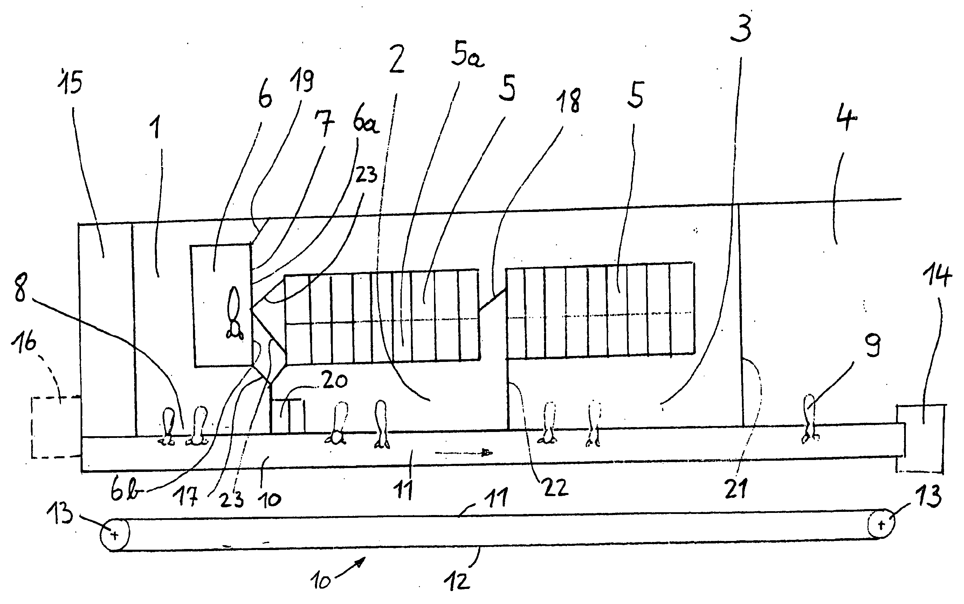

Nachstehend wird die Erfindung anhand eines Ausführungsbeispieles näher erläutert. Die einzige Figur zeigt in schematischer Darstellung einen Laufstall für Milchkühe mit einer erfindungsgemäßen Fütterungseinrichtung und mit einer erfindungsgemäßen Fördereinrichtung zum Transportieren von Futter zu Futterplätzen der Milchkühe.

Der Laufstall für Milchkühe sieht mehrere Bereiche vor, in denen sich die Kühe aufhalten können.

Ein erster Bereich 1 ist für frisch abgekalbte und für sehr hochleistende Milchkühe vorgesehen, die jedoch eine geringe Futteraufnahme zeigen. Dieser Bereich ist vorzugsweise als Vollstrohliegebereich ausgeführt. Das heißt, der Boden ist in diesem Bereich vollständig mit Stroh bedeckt.

Ein zweiter Bereich 2 ist für Milchkühe vorgesehen, die nach dem Melken fressen wollen, und die nicht frisch gekalbt haben und die kein gestörtes Allgemeinbefinden aufweisen. In diesem Bereich sind unkomfortable oder gar keine Liegebereiche vorgesehen.

Ein dritter Bereich 3 ist für Milchkühe vorgesehen, die fressen wollen, die jedoch vor dem Fressen nicht gemolken wurden.

Ein vierter Bereich 4 ist für trockene Kühe vorgesehen, die keine Milch geben.

In den Bereichen 2 und 3 sind ferner Liegebereiche 5 für die Milchkühe vorgesehen. Jedoch sind in dem Bereich 2 besondere Liegebereiche 5a vorgesehen, beispielsweise Gummimatten. Diese Liegebereiche sind für die Milchkühe nicht komfortabel. Nach dem Fressen haben sie demzufolge nur geringe Veranlassung, in diesen Liegebereichen 5a zu bleiben, sondern sie wollen vielmehr in andere Bereiche, die einen höheren Komfort im Liegebereich haben.

Die Bereiche 1, 2, 3 und 4 sind voneinander getrennt, so dass die Milchkühe nicht ohne weiteres zwischen diesen Bereichen wechseln können.

Ferner ist ein freiwilliges automatisiertes Melksystem mit einem Melkroboter 6 vorgesehen, der im Ausführungsbeispiel in einem von den oben genannten Bereichen abgetrennten Melkbereich 7 eingerichtet ist. Die Milchkühe 9 können den Melkroboter durch einen Eingang 6a freiwillig betreten und sich von dem Melkroboter 6 melken lassen. Nach dem Melken können die Milchkühe den Melkroboter über einen Ausgang 6b wieder verlassen.

Entlang den Bereichen 1, 2, 3 und 4 ist eine erfindungsgemäße Futter-Fördereinrichtung angeordnet, die zum Transportieren von Futter zu Futterplätzen 8 vorgesehen ist, Diese Futterplätze 8 sind in jedem der Bereiche 1, 2, 3, 4 vorgesehen. Einige Milchkühe 9 sind schematisch an den Futterplätzen 8 eingezeichnet.

Die Futter-Fördereinrichtung weist ein endloses Förderband 10 auf, das entlang der Futterplätze 8 angeordnet ist, wobei in der Draufsicht lediglich ein Futtertrum 11 des Förderbandes 10 abgebildet ist.

Die Abbildung zeigt unten in einer Ansicht schematisch das endlos umlaufende Förderband 10 mit dem Futtertrum 11, sowie einem Leertrum 12. Ober Umlenkrollen 13 kann das Förderband 10 endlos umlaufen.

Das Futtertrum 11 erstreckt sich zwischen einem Trumanfang und einem Trumende, beispielsweise über eine Länge von etwa 25 Meter. Entlang des Futtertrums 11 stehende Milchkühe 9 können jederzeit Futter von dem Futtertrum fressen.

Das Futtertrum 11 bewegt sich in Richtung des eingezeichneten Pfeils, also in der Darstellung von links nach rechts, von dem Bereich 1 in Richtung zu dem Bereich 4 des Laufstalles. Die Fördergeschwindigkeit des Förderbandes 10 ist so eingestellt, dass das Futter - je nach dessen Zusammensetzung - zwischen 4 und 30 Stunden benötigt, um von dem Trumanfang zu dem Trumende des Futtertrums 11 zu gelangen.

Das erfindungsgemäße Förderband 10 ist für Fördergeschwindigkeiten zwischen 1 Meter pro Stunde bis zu 8 Meter pro Stunde ausgelegt, bei kontinuierlicher Förderung.

Das Förderband 10 kann kontinuierlich fördern; es ist aber auch eine diskontinuierliche Förderung möglich. Beispielsweise kann Förderband das Futter langsam 1 Meter in Förderrichtung fördern, eine Weile stehen bleiben, um dann weiter zu fördern. Mit dem erfindungsgemäßen Förderband kann eine auf die gegebenen Verhältnisse abgestimmte Förderung eingestellt werden. Zu diesem Zweck ist eine Steuereinrichtung 16 vorgesehen, über die das Bedienpersonal das Förderband steuern kann. Eine einmalige Programmierung der Steuereinrichtung kann genügen, so dass die Notwendigkeit eines Eingriffes durch Bedienpersonal minimiert ist.

Restfutter, das am Trumende des Futtertrums noch nicht von Milchkühen gefressen wurde, fällt in eine Aufnahme, die hier durch einen Behälter 14 gebildet ist.

Die Steuereinrichtung 16 kann als weiteren Parameter neben der Futtermischung und Länge der Futterachse auch Füllstandswerte dieser Aufnahme auswerten. Beispielsweise ist in erfindungsgemäßer Weiterbildung möglich, eine automatische Abschaltung des Förderbandes 10 vorzunehmen, wenn zuviel Restfutter in der Aufnahme ist.

Ferner ist ein Futterspeicher 15 vorgesehen, aus dem Futter über eine Transporteinrichtung an den Trumanfang des Futtertrums 11 abgegeben werden kann.

Während der Dauer des Transports von dem Trumanfang zum Trumende verliert das Futter an Frische. Die Milchkühe 9 bevorzugen frisches Futter. Für die Milchkühe 9 ist es daher attraktiv, das Futter an dem Trumanfang zu fressen. Hinzu kommt, dass für die Milchkühe wohlschmeckenden Bestandteile des Futters nach Möglichkeit zuerst gefressen werden. Am Trumende des Futtertrums kann demzufolge Futter zum Fressen bereitliegen, das jedoch nicht mehr so frisch ist, und bei dem die wohlschmeckenden Futterkomponenten bereits von Milchkühen 9 gefressen wurden, die näher am Trumanfang waren.

Im Bereich 4 kann es gegebenenfalls erforderlich sein, Stroh beizumischen, falls dort nicht ausreichend Stroh vorgelegt ist. Dies kann der Fall sein, wenn die Länge der Strohalme kürzer als 4 Zentimeter beträgt. In diesem Fall können die Milchkühe 9 die - nicht schmackhaften - Strohhalme nicht aussondern. Erfindungsgemäß wird jedoch angestrebt, ein Strohmanagement vorzusehen, bei dem die weiter am Trumanfang stehenden Milchkühe 9 das Stroh aussondern können, so dass das Stroh auf dem Futtertrum 11 liegen bleibt. Die am Trumende stehenden Milchkühe 9 müssen sich dann mit dem wenig attraktiven Stroh als Futter begnügen.

Die Nahrhaftigkeit und die Schmackhaftigkeit des vorgelegten Futters nimmt entlang der Futterachse ab. Dies wird gesteuert durch die Fördergeschwindigkeit und den natürlichen Futterbedarf der Milchkühe 9. Die Abnahme von Nahrhaftigkeit und Schmackhaftigkeit des vorgelegten Futters spiegelt in gewisser Hinsicht auch den Jahreslauf wider: dem Trumanfang des Futterbandes mit dem frischsten Futter entspricht etwa das Frühjahr, in dem die nahrhaftesten und schmackhaftesten Pflanzen und Gräser etc in ausreichender Menge bereitstehen. Das Trumende entspricht dann etwa dem Winter, in dem vorwiegend Stroh bereitsteht, von vorbereiten Silagen einmal abgesehen.

Milchkühe 9, die in die attraktiven Bereiche 1 und 2 des Laufstalles wollen, können unter bestimmten Voraussetzungen dorthin gelangen.

Milchkühe 9, die von dem Melkroboter 6 gemolken wurden, werden über eine schaltbare Ausgangsweiche 17 entweder in den Bereich 1 oder in den Bereich 2 gelassen. Die Weichenstellung erfolgt anhand von Daten, die vom Melkroboter zu den Milchkühen 9 erfasst wurden. Die sehr leistungsstarken, aber verminderte Futteraufnahme zeigenden Milchkühe 9, sowie die frisch abgekalbten Milchkühe 9 gelangen über die schaltbare Ausgangsweiche 17 in den Bereich 1. Die anderen, im Melkroboter 6 gemolkenen Milchkühe 9 gelangen über die Ausgangsweiche 17 in den Bereich 2. Beide Bereiche 1 und 2 sind für die Milchkühe 9 aufgrund des sehr frischen Futters attraktiv, so dass die Milchkühe 9 motiviert sind, sich melken zu lassen.

Die Milchkühen 9 können den Bereich 1 über eine lediglich einseitig öffnende Pendeltür 19 verlassen, die an die Liegebereiche 5 angrenzt, und schließlich ohne weiteres in den Bereich 3 gehen. In die andere Richtung öffnet die Pendeltüre 19 nicht, so dass die Milchkühe 9 bspw. aus dem Liegebereich 5 nicht in den Bereich 1 über diese Pendeltür 19 gelangen können.

Zwischen den Bereichen 2 und 3 ist eine weitere Pendeltür 18 vorgesehen, über die die Milchkühe 9 lediglich aus dem Bereich 2 in den Bereich 3 gelangen können, aber nicht umgekehrt. Die Pendeltür 18 lässt demzufolge nur in eine Richtung Milchkühe 9 passieren.

In den Bereich 2 bekommen die Milchkühe 9 also lediglich Zutritt über den Melkroboter 6; die Milchkühe 9 können diesen Bereich 2 lediglich über die Pendeltür 18 verlassen. Um zu vermeiden, dass die Milchkühe 9 dauerhaft in dem Bereich 2 bleiben - weil das Futter dort wohlschmeckend und frisch ist - ist der darin eingerichtete Liegebereich 5a unkomfortabel ausgestattet, beispielsweise mit Gummimatten. Die ausserhalb des Bereichs 2 eingerichteten Liegebereiche 5 können mit Stroh oder mit Komfortmatten ausgelegt sein, so dass die Milchkühe 9 motiviert sind, den Bereich 2 durch die Pendeltür 18 zu verlassen. Die Komfortmatten sind grundsätzlich weich ausgeführt, sie können beispielsweise aus weichem Gummi oder aus einem mehrschichtigen Gummi-Schaumstoffverbund gebildet sein.

Anstelle der Pendeltüren können auch andere geeignete einseitig öffnende Absperrungen vorgesehen werden.

Bei dem hier lediglich schematisch abgebildeten Betrieb sind ferner Fressliegeboxen 20 eingerichtet. Hier werden Milchkühe 9 von den übrigen Milchkühen 9 gesondert hineingelassen, die beispielsweise während der Brunst Unruhe in den Stall bringen würden.

Die einzelnen Bereiche 1, 2, 3 und 4 sind mittels Trennwände 21, 22, 23 voneinander getrennt. Zwischen den Bereichen 3 und 4 ist im Ausführungsbeispiel eine durchgehende Trennwand 21 eingerichtet. Zwischen den Bereichen 2 und 3 ist eine Trennwand 22 eingereichtet, so dass in der beschriebenen Weise nur Milchkühe über die Pendeltür 18 zwischen den Bereichen wechseln können, aber auch nur in der Richtung aus dem Bereich 2 in den Bereich 3. Die Bereiche 1 und 2 können im Ausführungsbeispiel nur über den Melkroboter 6 erreicht werden. An den Melkroboter 6 angrenzende Trennwände 23 sind im Ausführungsbeispiel so angeordnet sind, dass die Milchkühe 9 in den Bereich 2 nur über den Melkroboter 6 gelangen.

Mit der hier beschriebenen erfindungsgemäßen Fütterungseinrichtung kann eine deutliche Erhöhung der Milchrate erzielt werden. Zugleich ist sichergestellt, dass in jedem der beschriebenen Bereiche 1 bis 4 die Milchkühe 9 ausreichend zu fressen haben.

Erfindungsgemäß ist durch die Anordnung der Bereiche und des Förderbandes lediglich eine Futterachse vorgesehen; entlang der Futterachse sind entsprechend dem Laktationstand der Milchkühe Futterbereiche bereitgestellt. Am Beginn der Futterachse sind die Futterbereiche für die sehr leistungsstarken Milchkühe und am Ende der Futterachse sind die Futterbereiche für die niedrig laktierenden Milchkühe sowie die trockenstehenden Milchkühe angeordnet.

Durch das in lediglich eine Richtung auf einer gemeinsamen Futterachse (hier Futtertrum) und an einer einzigen Aufgabestelle aufzugebende Futter ist ein sehr einfaches Futtermanagement erzielt, das in den Nachtstunden keine Anwesenheit von Bedienpersonal erfordert. Zudem ist eine ununterbrochene Futtervorlage gewährleistet.

Mit dem erfindungsgemäßen Förderband und der erfindungsgemäßen Fütterungseinrichtung ist ein automatisiertes Fütterungssystem für Milchkühe vorgeschlagen, bei dem für "Ruhe im Stall" gesorgt ist. Die permanente Futtervorlage für alle Milchkühe vermeidet zudem Rangprobleme unter den Milchkühen. Rangniedere Milchkühe werden von ihren Futterplätzen nicht verdrängt, weil die ranghöheren Milchkühe jederzeit an das Futtertrum gelangen.

Der Futterspeicher und das Förderband können in günstiger Weise über die bereits erwähnte Steuerungseinrichtung miteinander steuerungstechnisch gekoppelt und aufeinander abgestimmt sein. Auch die Restfutterentsorgung ist sehr einfach und schnell möglich, denn das Restfutter kann in bereitstehende Container fallen, die mit Schleppern abtransportiert werden können.

### Positionszahlenliste

1. erster Bereich
2. zweiter Bereich
3. dritter Bereich
4. vierter Bereich
5. Liegebereich
5a Liegebereich
6. Melkroboter
6a Eingang
6b Ausgang
7. Melkbereich
8. Futterplatz
9. Milchkuh
10. Förderband
11. Futtertrum
12. Leertrum
13. Umlenkrolle
14. Behälter
15. Futterspeicher
16. Steuerungseinrichtung
17. Ausgangsweiche
18. Pendeltür
19. Pendeltür
20. Fressliegebox
21. Trennwand
22. Trennwand
23. Trennwand

## Patentansprüche

1. Fütterungseinrichtung zur Fütterung von Milchkühe (9) mit einer Fördereinrichtung, die ein Förderband (10) aufweist, dessen zur Aufnahme von Futter ausgebildetes Futtertrum (11) sich in Transportrichtung zwischen einem Trumanfang und einem Trumende erstreckt, wobei
bei der Fütterungseinrichtung entlang wenigstens einer Längsseite des Futtertrums (11) mehrere, in Transportrichtung des Futtertrums (11) hintereinander und getrennt voneinander angeordnete Bereiche (1, 2, 3, 4) jeweils mit Zugang zum Futtertrum (11) vorgesehen sind,
**dadurch gekennzeichnet, dass**
das Förderband ein endlos umlaufendes Förderband ist, wobei
eine Fördergeschwindigkeit des endlosen Förderbandes (10) für eine Verweildauer des Futters auf dem Futtertrum (11) von 4 bis 30 Stunden vorgesehen ist, und ferner
ein Melkroboter (6) zum automatischen Melken von Milchkühen (9) vorgesehen ist, wobei eine am Ausgang des Melkroboters (6) angeordnete schaltbare Ausgangsweiche (17) für die Milchkühe (9) vorgesehen ist, wobei mittels der Ausgangsweiche (17) wahlweise ein Zugang zu einem der getrennt voneinander angeordneten Bereiche (1, 2, 3, 4) jeweils mit Zugang zum Futtertrum (11) geschaltet werden kann.

2. Fütterungseinrichtung nach Anspruch 1, bei dem ein Luftgebläse in dem Melkroboter (6) und / oder in dem Bereich (1, 2, 3, 4) angeordnet ist, der dem Trumanfang des Futtertrums (11) zunächst gelegen ist.

3. Fütterungseinrichtung nach Anspruch 1, bei der die Fördereinrichtung eine Steuereinrichtung (16) zur Einstellung der Verweildauer aufweist.

4. Fütterungseinrichtung nach Anspruch 1, bei der die Bandbreite des Förderbandes (10) etwa 25 Zentimeter bis 100 Zentimeter beträgt.

5. Fütterungseinrichtung nach Anspruch 1, bei der die Bandbreite des Förderbandes (10) etwa 35 Zentimeter bis 200 Zentimeter beträgt.

6. Fütterungseinrichtung nach Anspruch 1, bei der entlang wenigstens einer der beiden Längsseiten des Futtertrums (11) ein Bord angeordnet ist.

7. Fütterungseinrichtung nach einem oder mehreren der vorangegangenen Ansprüche, bei der ein Futterspeicher (15) vorgesehen ist, aus dem Futter an den Bandanfang des Futtertrums (11) abgegeben wird.

8. Fütterungseinrichtung nach Anspruch 7, bei der der Futterspeicher (15) eine Transporteinrichtung aufweist, die vorzugsweise durch ein Endlosförderband, einen Kratzbodenvorschub, einen Schubboden , ein über dem Futtertrum angeordneter Silo oder eine Trogschnecke gebildet ist.

9. Fütterungseinrichtung nach Anspruch 8, bei der die Transporteinrichtung und die Futter-Fördereinrichtung zur Anpassung der Abgabe von Futter aus dem Futterspeicher (15) an die Fördergeschwindigkeit des Förderbandes (10) über die Steuereinrichtung (16) gemeinsam gesteuert werden.

10. Fütterungseinrichtung nach einem oder mehreren der vorangegangenen Ansprüche, bei der an dem Trumende des Futtertrums (11) eine Aufnahme, bspw. Mulde oder Behälter(14) zur Aufnahme von Restfutter angeordnet ist.

11. Verwendung einer Futtermischung bei einer Fütterungseinrichtung nach einem oder mehreren der vorangegangenen Ansprüche, wobei
die Futtermischung wenigstens zwei Futterkomponenten aufweist, von denen eine nahrhafter und/oder schmackhafter und von denen die andere weniger nahrhaft und /oder schmackhaft ist, wobei die weniger nahrhafte und/oder schmackhafte Komponente in einer Form derart beigemischt ist, dass die Milchkühe diese weniger nahrhafte und/oder schmackhafte Futterkomponente beim Fressen aussondern können.

12. Verwendung nach Anspruch 11, bei der die weniger nahrhafte und/oder schmackhafte Komponente durch Stroh mit Stücklängen von 4 Zentimeter und länger gebildet ist.

## Claims

1. Feeding device for feeding dairy cows (9) having a conveying device which has a conveyer belt (10), the feed strand (11) of which designed for receiving feed extends in the transport direction between a strand beginning and a strand end, wherein in the feeding device along at least one longitudinal side of the feed strand (11), several regions (1, 2, 3, 4) arranged one behind another in the transport direction of the feed strand (11) and separated from one another are provided in each case with access to the feed strand (11), **characterised in that** the conveyer belt is a continuously rotating conveyer belt, wherein a conveying rate of the continuous conveyer belt (10) is provided for a residence period of the feed on the feed strand (11) of 4 to 30 hours, and furthermore a milking robot (6) is provided for automatic milking of dairy cows (9), wherein a switchable exit deflector (17) arranged at the exit of the milking robot (6) is provided for the dairy cows (9), wherein by means of the exit deflector (17), optionally access to one of the regions (1, 2, 3, 4) arranged separated from one another may be switched in each case with access to the feed strand (11).

2. Feeding device according to claim 1, in which an air fan is arranged in the milking robot (6) and/or in the region (1, 2, 3, 4) which is placed next to the strand beginning of the feed strand (11).

3. Feeding device according to claim 1, in which the conveying device has a control device (16) for adjusting the residence period.

4. Feeding device according to claim 1, in which the belt width of the conveyer belt (10) is about 25 centimetres to 100 centimetres.

5. Feeding device according to claim 1, in which the belt width of the conveyer belt (10) is about 35 centimetres to 200 centimetres.

6. Feeding device according to claim 1, in which a ledge is arranged along at least one of the two longitudinal sides of the feed strand (11).

7. Feeding device according to one or more of the preceding claims, in which a feed store (15) is provided, from which feed is released to the belt beginning of the feed strand (11).

8. Feeding device according to claim 7, in which the feed store (15) has a transport device which is preferably formed by a continuous conveyer belt, a scraper floor feed, a pusher plate, a silo arranged above the feed strand or a trough screw.

9. Feeding device according to claim 8, in which the transport device and the feed conveying device are controlled together to adapt the release of feed from the feed store (15) to the conveying rate of the conveyer belt (10) via the control device (16).

10. Feeding device according to one or more of the preceding claims, in which a receiver, for example bucket or container (14), for receiving residual feed is arranged on the strand end of the feed strand (11).

11. Use of a feed mixture in a feeding device according to one or more of the preceding claims, wherein the feed mixture has at least two feed components, of which one is nutritious and/or palatable and of which the other is less nutritious and/or palatable, wherein the less nutritious and/or palatable component is added in a form such that the dairy cows may select this less nutritious and/or palatable feed component during eating.

12. Use according to claim 11, in which the less nutritious and/or palatable component is formed by straw with piece lengths of 4 centimetres and longer.

## Revendications

1. Dispositif de distribution de fourrage pour l'alimentation de vaches laitières (9), avec un dispositif de transport comportant une bande de transport (10), dont le brin à fourrage (11) prévu pour la réception de fourrage s'étend entre un début de brin et une extrémité de brin dans la direction de transport, où
dans ledit dispositif de distribution de fourrage, plusieurs zones (1, 2, 3, 4) disposées successivement et séparément l'une de l'autre le long d'au moins une longueur du brin à fourrage (11) dans la direction de transport du brin à fourrage (11) sont prévues chacune avec un accès au brin à fourrage (11),
**caractérisé en ce que**
la bande de transport est une bande de transport à circulation sans fin, où
une vitesse de transport de la bande de transport sans fin (10) est prévue pour une durée de présence du fourrage comprise entre 4 et 30 heures sur le brin à fourrage (11), et où en outre
un robot de traite (6) est prévu pour la traite automatique des vaches laitières (9), un aiguillage de sortie (17) commutable pour les vaches laitières (9) étant prévu à la sortie du robot de traite (6), un accès à une des zones (1, 2, 3, 4) séparées entre elles pouvant être commuté avec un accès correspondant au brin à fourrage (11) au moyen de l'aiguillage de sortie (17).

2. Dispositif de distribution de fourrage selon la revendication 1, où une soufflerie d'air est disposée dans le robot de traite (6} et/ou dans la zone (1, 2, 3, 4) la plus proche du début du brin à fourrage (11).

3. Dispositif de distribution de fourrage selon la revendication 1, où le dispositif de transport comporte un dispositif de commande (16) pour le réglage de la durée de présence.

4. Dispositif de distribution de fourrage selon la revendication 1, où la largeur de la bande de transport (10) est comprise entre 25 et 100 centimètres environ.

5. Dispositif de distribution de fourrage selon la revendication 1, où la largeur de la bande de transport (10) est comprise entre 35 et 200 centimètres environ.

6. Dispositif de distribution de fourrage selon la revendication 1, où un bord est disposé le long d'au moins une des deux longueurs du brin à fourrage (11).

7. Dispositif de distribution de fourrage selon une ou plusieurs des revendications précédentes, où un magasin à fourrage (15) est prévu, à partir duquel du fourrage est délivré au début du brin à fourrage (11).

8. Dispositif de distribution de fourrage selon la revendication 7, où le magasin à fourrage (15) comporte un dispositif de transport préférentiellement formé par une bande de transport sans fin, un convoyeur à raclettes, un fond mouvant, un silo disposé au-dessus du brin à fourrage ou une vis en auge.

9. Dispositif de distribution de fourrage selon la revendication 8, où le dispositif de transport et le dispositif de transport de fourrage sont commandés ensemble par le dispositif de commande (16) pour l'ajustement de la délivrance de fourrage hors du magasin à fourrage (15) à la vitesse de transport de la bande de transport (10).

10. Dispositif de distribution de fourrage selon une ou plusieurs des revendications précédentes, où une réception, telle qu'une auge ou un récipient (14) destinée à recevoir le fourrage restant est disposée à l'extrémité du brin à fourrage (11).

11. Utilisation d'un mélange de fourrage pour un dispositif de distribution de fourrage selon une ou plusieurs des revendications précédentes, où
le mélange de fourrage comprend au moins deux composants de fourrage, dont l'un est plus nourrissant et/ou plus goûteux et l'autre moins nourrissant et/ou moins goûteux, le composant moins nourrissant et/ou moins goûteux étant ajouté sous une forme telle que les vaches laitières peuvent séparer ce composant de fourrage moins nourrissant et/ou moins goûteux lorsqu'elles mangent.

12. Utilisation selon la revendication 11, où le composant moins nourrissant et /ou moins goûteux est constitué de paille avec une longueur de tige de 4 centimètres et plus.
